# EUROPÄISCHE PATENTANMELDUNG

(11) **EP 3 181 955 A1**
(43) Veröffentlichungstag der Anmeldung: **21.06.2017**
(21) Anmeldenummer: 16198780.5
(22) Anmeldetag: 15.11.2016
(51) Int. Cl.: F16H 61/16

(54) **VERFAHREN ZUM VERHINDERN VON UNERWÜNSCHTEN FAHRSITUATIONEN BEI EINEM FAHRZEUG**

(30) Priorität: 16.12.2015 DE 102015225497
(71) Anmelder: ZF Friedrichshafen AG, 88046 Friedrichshafen (DE)
(72) Erfinder: Pilzweger, Hans, 94152 Neuhaus am Inn (DE); Stöbich, Alexander, 94110 Wegscheid (DE)

(57) **Zusammenfassung**

Es wird ein Verfahren zum Verhindern von unerwünschten Fahrsituationen bei einem Fahrzeug (1) mit einem Getriebe mit automatisch durchgeführten Schaltvorgängen vorgeschlagen, wobei bei Kurvenfahrten des Fahrzeuges (1) automatische Rückschaltungen unterbunden werden.

## Beschreibung

Die vorliegende Erfindung betrifft ein Verfahren zum Verhindern von unerwünschten Fahrsituationen bei einem Fahrzeug gemäß der im Oberbegriff des Patentanspruches 1 näher beschriebenen Gattung.

Aus der Fahrzeugtechnik sind Fahrzeuge, insbesondere Nutzfahrzeuge, wie zum Beispiel Traktoren oder dergleichen bekannt, die mit einem automatischen bzw. automatisierten Getriebe ausgerüstet sind. Derartige Lastschaltgetriebe verfügen über Funktionen, die die Schaltung der Laststufen und der Synchrongänge automatisieren. In Abhängigkeit von der Motordrehzahl oder der Motorauslastung werden dadurch die Gänge ohne Fahrereingriff hoch- oder runtergeschaltet. Dies geschieht in jeder Fahrsituationen also auch in Kurvenfahrten. Die Unterdrückung einer automatisierten Synchron- oder Lastschaltung kann durch einen Knopfdruck ausschließlich fahrerseitig unterbunden werden. Jedoch muss der Fahrer diese Funktion kennen und im richtigen Augenblick anwenden. Meist werden kritische Fahrsituationen vom Fahrer nicht oder zu spät erkannt, so dass die Gefahr nicht abgewendet werden kann. Beispielsweise wenn der Fahrer eine Kurvenfahrt durchführt und gleichzeitig ein automatisierter Gangstufenwechsel erfolgt, kann es beim Einkoppeln zu gefährlichen Fahrsituationen kommen, da die Hinterräder des Nutzfahrzeuges die Traktion verlieren können. Vor allem bei Kurvenfahrten mit Anhänger kann bei einer Rückschaltung das Gespann einknicken und das Zugfahrzeug kann umkippen.

Demzufolge liegt der Erfindung die Aufgabe zu Grunde, ein Verfahren der eingangs beschriebenen Gattung vorzuschlagen, welches kritische Fahrsituationen verhindert.

Diese Aufgabe wird erfindungsgemäß durch die Merkmale des Patentanspruches 1 gelöst. Vorteilhafte Weiterbildungen ergeben sich aus den Unteransprüchen und der Beschreibung sowie den Zeichnungen.

Somit wird ein Verfahren zum Verhindern von unerwünschten Fahrsituationen bei einem Fahrzeug mit einem Getriebe mit automatisch durchgeführten Schaltvorgängen vorgeschlagen, bei dem bei Kurvenfahrten des Fahrzeuges automatische Rückschaltungen unterbunden werden.

Somit können gefährliche Fahrsituationen vermieden werden. Vorzugsweise wenn sich das Fahrzeug im Anhängerbetrieb befindet, kann auf diese Weise ein Einknicken zwischen Zugfahrzeug und Anhänger dem sogenannten Jack-Knifing sicher verhindert werden.

Zum Erkennen einer Kurvenfahrt kann vorzugsweise als Parameter ein Lenkwinkel an den Rädern der Vorderachse des Fahrzeuges erfasst werden. Im Rahmen der Fahrzeugsteuerung sind an dem Fahrzeug Sensoren beispielsweise zum Messen des Lenkwinkels an den Rädern der Vorderachse vorhanden. Diese Signale können auch im Rahmen des vorgeschlagenen Verfahrens verwendet werden, um eine Kurvenfahrt erkennen zu können. Diese Signale können beispielsweise über das Fahrzeug-CAN-System gesendet werden und von der Getriebesteuerung entsprechend ausgewertet werden, so dass automatische Rückschaltungen beim Erkennen der Kurvenfahrt verhindert bzw. ausgesetzt werden, bis die Kurvenfahrt beendet ist.

Eine Kurvenfahrt kann bei Lenkwinkeln zum Beispiel größer 10° erkannt werden. Dies ist ein parametrierbarer Wert. Besonders kritisch sind Rückschaltungen bei Kurvenfahrten des Fahrzeuges, wenn sich das Fahrzeug zudem im Schubbetrieb befindet. Deshalb ist im Rahmen des vorgeschlagenen Verfahrens vorgesehen, dass bei einer erkannten Kurvenfahrt überprüft wird, ob sich das Nutzfahrzeug im Schubbetrieb befindet. Auch hier können entsprechend vorhandene Signale der Getriebesteuerung verwendet bzw. ausgewertet werden.

Um sicher einen Anhängerbetrieb des Fahrzeuges erkennen zu können, ist bei dem vorgeschlagenen Verfahren vorgesehen, dass ein Signal eines Sensors an der Anhängerkupplung des Fahrzeuges bzw. Zugfahrzeuges erfasst wird. Sobald ein Anhänger an der Anhängerkupplung angebunden ist, wird dieses Signal an die Getriebesteuerung über das Bussystem zur Auswertung gesendet.

Nachfolgend wird die vorliegende Erfindung anhand der Zeichnungen weiter erläutert. Es zeigen:
Figur 1 eine schematische Ansicht eines als Traktor ausgeführten Nutzfahrzeuges mit einem Anhänger in Geradeausfahrt; und
Figur 2 eine schematische Ansicht des Traktors mit Anhänger bei einer Kurvenfahrt.

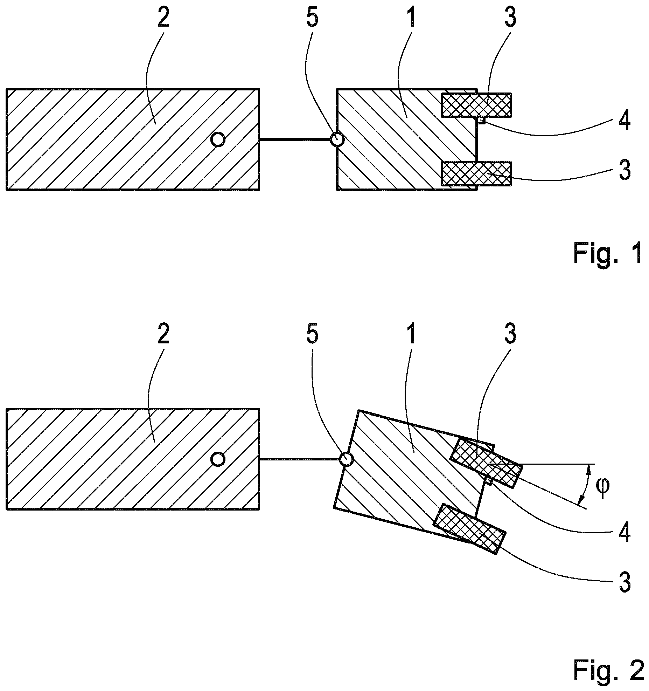

In den Figuren 1 und 2 ist ein als Traktor mit einem Anhänger 2 ausgeführtes Fahrzeug 1 dargestellt, wobei das erfindungsgemäße Verfahren hieran beispielhaft erläutert wird.

Aus Figur 1 ist ersichtlich, dass bei einem Lenkwinkel ϕ an den Rädern 3 der Vorderachse kleiner 10° eine Geradeausfahrt erkannt wird und somit automatische Rückschaltungen erlaubt sind, wenn die vorgegebenen Schaltschwellen des Getriebes erreicht werden, wie zum Beispiel Drehzahl und Motorlast.

In Figur 2 ist das Fahrzeug 1 mit einem Lenkwinkel ϕ an den Rädern 3 der Vorderachse größer 10° gezeigt. Bei diesem Lenkwinkel ϕ wird eine Kurvenfahrt durch das erfindungsgemäße Verfahren erkannt und somit automatische Rückschaltungen verboten, auch wenn die Schaltschwellen erreicht werden. Auf diese Weise wird ein Einknicken zwischen Traktor 1 und Anhänger 2 sicher verhindert.

Der Lenkwinkel ϕ an den Rädern 3 der Vorderachse wird zumindest über einen vorhandenen Lenkwinkelsensor 4 erfasst und die entsprechenden Signale über das Fahrzeug-CAN-System an die Getriebesteuerung zur Auswertung übermittelt. Zudem wird zum Verhindern einer Rückschaltung geprüft wird, ob sich das Fahrzeug im Schubbetrieb befindet. Zum Erkennen eines Anhängerbetriebes wird ein Signal eines Sensors 5 an der Anhängerkupplung des Fahrzeuges 1 erfasst und über das nicht weiter dargestellte Fahrzeug-CAN-System an die Getriebesteuerung zur Auswertung übermittelt.

### Bezugszeichen

- 1: Nutzfahrzeug
- 2: Anhänger
- 3: Räder
- 4: Lenkwinkelsensor
- 5: Sensor zum Erfassen des Anhängerbetriebes
- ϕ: Lenkwinkel

## Patentansprüche

1. Verfahren zum Verhindern von unerwünschten Fahrsituationen bei einem Fahrzeug (1) mit einem Getriebe mit automatisch durchgeführten Schaltvorgängen, **dadurch gekennzeichnet, dass** bei Kurvenfahrten des Fahrzeuges (1) automatische Rückschaltungen unterbunden werden.

2. Verfahren nach Anspruch 1, **dadurch gekennzeichnet, dass** bei Kurvenfahrten des Fahrzeuges (1) im Anhängerbetrieb automatische Rückschaltungen unterbunden werden.

3. Verfahren nach Anspruch 1 oder 2, **dadurch gekennzeichnet, dass** zum Erkennen einer Kurvenfahrt ein Lenkwinkel (ϕ) an den Rädern (3) der Vorderachse des Fahrzeuges (1) erfasst wird.

4. Verfahren nach Anspruch 3, **dadurch gekennzeichnet, dass** eine Kurvenfahrt bei Lenkwinkeln (ϕ) größer 10° erkannt wird.

5. Verfahren nach Anspruch 3 oder 4, **dadurch gekennzeichnet, dass** der Lenkwinkel (ϕ) an den Rädern (3) der Vorderachse über vorhandene Lenkwinkelsensoren (4) erfasst und entsprechende Signale über das Fahrzeug-CAN-System an die Getriebesteuerung zur Auswertung übermittelt werden.

6. Verfahren nach einem der vorangehenden Ansprüche, **dadurch gekennzeichnet, dass** zum Verhindern einer Rückschaltung geprüft wird, ob sich das Fahrzeug (1) im Schubbetrieb befindet.

7. Verfahren nach einem der vorangehenden Ansprüche, **dadurch gekennzeichnet, dass** zum Erkennen des Anhängerbetriebes ein Signal eines Sensors (5) zum Erfassen des Anhängerbetriebes an der Anhängerkupplung des Fahrzeuges ausgewertet wird.
